# EUROPEAN PATENT SPECIFICATION

(11) **EP 3 564 965 B1**
(45) Date of publication and mention of the grant of the patent: **14.02.2024**
(21) Application number: 16904247.0
(22) Date of filing: 29.12.2016
(51) Int. Cl.: G21C 3/34, G21C 3/344

(54) **NUCLEAR REACTOR FUEL ASSEMBLY**
KERNBRENNSTABBÜNDEL
ASSEMBLAGE DE COMBUSTIBLE DE RÉACTEUR NUCLÉAIRE

(43) Date of publication of application: 06.11.2019
(73) Proprietor: Joint-Stock Company "TVEL", Moscow 115409 (RU)
(72) Inventor: ENIN, Anatoly Alekseevich, Novosibirsk 630110 (RU); SHUSTOV, Mstislav Aleksandrovich, Novosibirsk 630017 (RU); IVANOV, Roman Sergeevich, Novosibirsk 630110 (RU); DOROKHOV, Roman Aleksandrovich, Novosibirsk 630098 (RU); MALCHEVSKIY, Dmitry Vyacheslavovich, Podolsk 142100 (RU); VOLKOV, Sergey Evgenuevich, Moscow 129075 (RU); VASILCHENKO, Ivan Nikitovich, Podolsk 142102 (RU); VYALITSYN, Viktor Vasilevich, Podolsk 142115 (RU); KYSHMANOV, Sergey Aleksandrovich, Podolsk 142108 (RU)
(74) Representative: Friese Goeden Patentanwälte PartGmbB
(86) International application number: PCT/RU2016/000947
(87) International publication number: WO 2018/124916

(56) References cited:
- RU-C1- 2 124 239
- RU-C1- 2 273 062
- RU-C1- 2 391 724
- RU-C2- 2 351 027
- US-A1- 2016 163 402

## Description

The invention relates to the field of nuclear energy, in particular, to the nuclear reactor fuel assembly design, and is aimed at ensuring effective mixing of the coolant in order to improve heat removal from fuel elements and increase the critical heat flux during operation of fuel assemblies in the NPP's nuclear power reactors.

Actual industry objectives to increase energy generation at nuclear power plants of the VVER type and to increase the efficiency of fuel use at nuclear power plants require the improved fuel cycles implementation. The simplest and most effective way to increase the energy generation of operating NPP power units is to increase their installed capacity and increase the duration of the refueling operation, which is currently being implemented at power units with VVER. The implementation of these objectives is accompanied by tightening of the operating conditions of fuel assemblies (increase in power, energy release non-uniformity increase, extension of the duration of operation). The requirements for ensuring reliable and safe operation are increasing.

The energy release over the cross section of the nuclear reactor fuel assembly has significant non-uniformity. This leads to uneven distribution of the coolant parameters and, accordingly, a decrease in critical power ratio in the cells between the fuel elements. To balance the coolant parameters over the section of the fuel assembly, as well as to turbulize the coolant flow in order to improve heat transfer, the agitators are used.

The fuel assembly of a nuclear reactor, containing a hexagonal bundle of fuel elements (fuel elements/rods), placed in cells located along the length of the spacer grids assembly. The head and tail of the fuel assembly are connected by guiding channels in which the rods, including material, that absorbs neutrons, move (see A.Ya. Kramerov Nuclear Reactor Design Issues. Moscow, Atomizdat, 1947, p.204, Fig.7.1.11b).

The drawback of this device lies in the deformation of the structure during operation due to insufficient rigidity and, as a result, the impossibility of operating a fuel assembly of this design at advanced operating mode of the reactor plant - within 107-110% of the rated power.

The closest in technical essence and the achieved result to the proposed technical solution is the nuclear reactor fuel assembly with a cross-section in the shape of a regular hexagon, comprising upper and bottom nozzles, guiding channels, fuel elements located at the nodes of a triangular grid and at least one lattice, consisting of cells permanently connected to each other. The cells of this lattice are made in the shape of a polygonal tube, the longitudinal axis of which coincides with the longitudinal axis of the fuel element. Six non-adjacent cell faces are made inclined by changing the face width along the cell axis. Between the inclined faces there are faces parallel to the fuel assembly axis, with which the cells adjoin each other (see the patent of the Russian Federation for the invention No. 2273062, publ. on March 27, 2006, bul. No. 9) - the prototype.

The drawback of this fuel assembly design is the impossibility of operating at the advanced operating mode of the reactor plant - within 107-110% of the rated power due to the impossibility of ensuring the safe operation of nuclear fuel, including due to the presence of a steam film formed due to the coolant rotation around part of the fuel elements, which deteriorates their performance.

The technical problem to be solved by the claimed device is to increase the reliability of the fuel assembly, the safety of the nuclear reactor and increase the mixing properties.

The technical result achieved by using the claimed device is to ensure balancing of the coolant parameters and increase of the critical power ratio in the core of a nuclear reactor by ensuring mass transfer between thermohydraulic cells in the fuel assembly by deflecting the coolant flow at zero total torque.

The specified technical result is achieved by the fact that in the known fuel assembly of the nuclear reactor with a cross-section in the shape of a regular hexagon, containing upper and bottom nozzles, guiding channels, fuel elements located at the nodes of a triangular grid and at least one lattice consisting of permanently connected cells made in the shape of a polygonal tube, the longitudinal axis of which coincides with the longitudinal axis of the fuel element, six non-adjacent faces of the cell are made inclined by changing the width of the face along the cell axis, between the inclined faces there are faces parallel to the axis of the fuel assembly, with which the cells are adjacent to another, according to the invention, the cells are arranged in the lattice in rows parallel to one of the large diagonals of the regular hexagon. One pair of opposite inclined faces has an edge width on the upper nozzle side that is less than the width of the edge on the lower nozzle side. The cell centerline intersecting these faces forms the angle of 30 degrees with the above diagonal. The rest of the inclined faces have a wider edge on the upper nozzle side than the edge width on the bottom nozzle side. In this case, the cells of each row are oriented in the same way, and the cells centerlines in adjacent rows form the angle of 60 degrees.

The technical result is also achieved by the fact that the width of the cells inclined faces changes along the cell axis in such a way that the cross-sectional area of the cell is constant along its axis.

The choice of the geometry of the cell inclined edges with varying width of the edges, as well as the arrangement of the lattice cells implemented in the proposed design, ensure the formation of inclined channels between the cells and the fuel elements, which deflect the coolant flows as they pass through them with simultaneous mixing with the coolant flows at the neighboring cells, which results in to the corresponding averaging of temperatures and steam quality.

Due to the fact that the cells of each row are oriented in the same way, and the cells centerlines in adjacent rows form an angle of 60 degrees, the channels inclination provides a deflection of the coolant flows with the formation of closed bilateral circuits. As a result, the total torque of the hydrodynamic forces for each fuel assembly is zero. Taking into the account the implementation of the proposed condition for the constancy of the cell sectional area along its axis, the movement of the coolant mass along the closed circuits is achieved as efficiently as possible. More heated coolant masses fall into areas with lower energy releases, and vice versa. The reduction of the non-uniformity of the coolant heating over the cross section of the core, balancing of its temperature and steam quality and an increase of the critical power ratio in the nuclear reactor core is provided.

RU 2 391 725 C1 discloses a hexagonal fuel assembly of a nuclear reactor. The respective lattice consists of integrally interconnected cells, each cell made in the form of a polygonal tube. Some non-adjacent facets of the cells are inclined and their width changes along the cell's axis. Opposite non-adjacent facets are oriented inversely. The cells are in contact via facets that are located in between said non-adjacent facets and that run parallel to the fuel assembly axis.

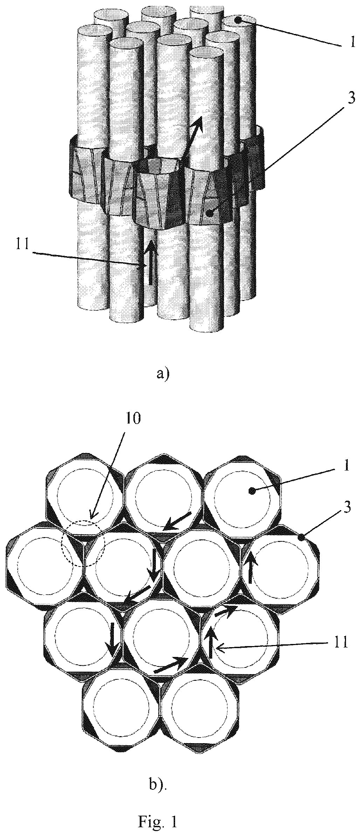

Fig. 1 shows the fuel assembly arrangement operation principle (fragmental): a) - side view; b) - top view.

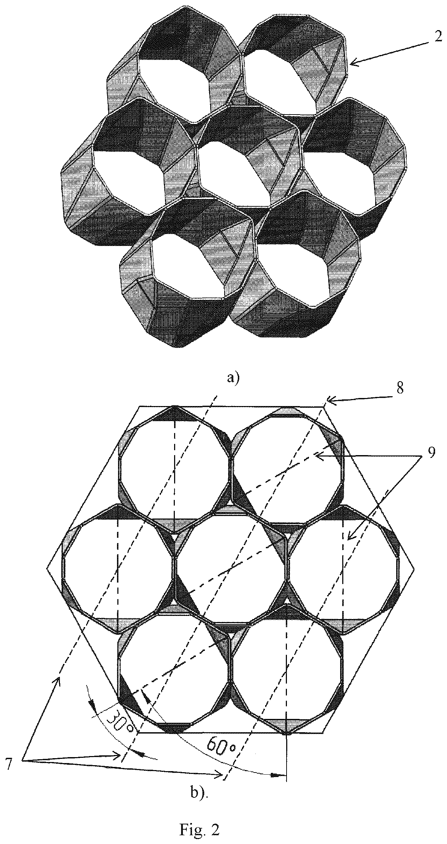

Fig. 2 shows a mixing grid (fragmental): a) - isometric view; b) - top view, arrangement of cells in rows.

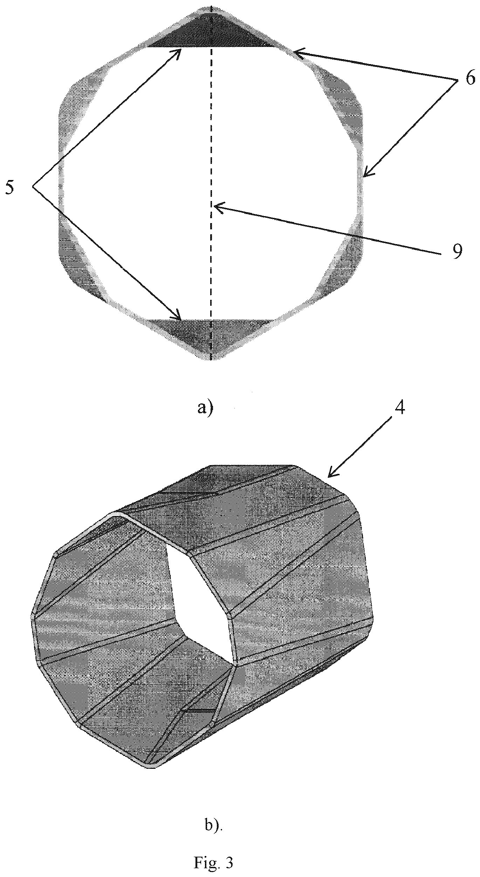

Fig. 3 shows a cell (option): a) - front view; b) - isometric view.

The nuclear reactor fuel assembly comprises the upper and bottom nozzles, guiding channels, fuel elements 1 located in the nodes of the triangular grid, at least one mixing grid 2, consisting of permanently interconnected cells 3. The cells are implemented in the shape of a polygonal tube 4, the longitudinal axis of which coincides with the longitudinal axis of the fuel element 1. Six non-adjacent cell 3 faces 5 are made inclined by changing the face width along the cell axis. Between the inclined faces 5, there are faces 6 parallel to the axis of the fuel assembly, with which the cells 3 are adjacent to each other. Cells 3 are located in the lattice in rows 7, parallel to one of the large diagonals 8 of the regular hexagon. One pair of opposite inclined faces 5 has an edge width on the upper nozzle side that is less than the width of the edge on the lower nozzle side. The cell 3 centerline 9 intersecting these faces forms the angle of 30 degrees with the above diagonal 8. The rest of the inclined faces 5 have a wider edge on the upper nozzle side than the edge width on the bottom nozzle side. At the same time, the cells 3 of each row 7 are oriented in the same way, and the cells 3 centerlines 9 in adjacent rows form the angle of 60 degrees.

Fuel elements 1 pass through the grid inside cells 3. Therein, inclined channels 10 are formed between cells 3 and fuel elements 1. During the fuel assembly operation in the reactor, the coolant 11 enters the fuel assembly and heats up due to the energy release of the fuel elements 1. The coolant heating non-uniformity caused by the energy release non-uniformity of the fuel elements 1 over the section and height of the fuel assembly, as well as the steam quality of the coolant 11 are leveled, since the geometry of the cells 3 and the presence of inclined channels 10 formed between the cells 3 and the fuel elements 1 ensure the deflection of the coolant 11 flows, mixing with flows at neighboring cells and the corresponding averaging of temperatures and steam quality. The selected inclination of the faces 5 of the cells 3 and, accordingly, the inclination of the channels 10 provides for a deflection of the coolant flows 11 with the formation of closed bilateral circuits. As a result, the total torque of the hydrodynamic forces for each fuel assembly is zero. In total, such a deviation of the flow leads to the movement of the mass of the coolant 11 along the closed circuits, due to which the more heated masses of the coolant 11 fall into areas with lower energy releases, and vice versa. Therein, as a result, the non-uniformity of the heating of the coolant 11 over the cross section of the core is reduced, its temperature and steam quality are balanced. In addition, even in areas with a uniform field of energy release, the critical power ratio increases due to the effect of intensification of heat transfer due to turbulization of the coolant flow 11 when passing through the lattice of the claimed design.

In the nuclear reactor fuel assembly, the mixing grid of the proposed design is installed perpendicular to the longitudinal axis of the fuel assembly and fixed on the longitudinal load-bearing elements, for example, guiding channels. In this case, in the places where the guiding channels pass through the lattice, the cells can be bypassed.

The present invention is industrially applicable and can be used in the manufacture of fuel assemblies for nuclear power reactors with increased safety by reducing the non-uniformity of the coolant parameters in the fuel assembly and the core, with the possibility of increasing the reactor power by increasing the margin to the coolant critical parameters.

## Claims

1. A nuclear reactor fuel assembly with a cross-section in the shape of the regular hexagon, comprising upper and bottom nozzles, guiding channels, fuel elements (1) located at the nodes of a triangular grid and at least one lattice (2) consisting of permanently interconnected cells (3) made in the shape of a polygonal tube (4), the longitudinal axis of which coincides with the longitudinal axis of the fuel elements, each cell (3) comprising six non-adjacent faces (5) that are made inclined due to a change in their width along the cell axis, and each cell (3) comprises faces (6) that are located between the non-adjacent faces (5) and that run parallel to the axis of the fuel assembly, the cells (3) being adjacent to each other by faces (6) and the cells (3) are located in lattice in rows (7) parallel to one of the large diagonals (8) of the regular hexagon,
**characterized in that** one pair of opposite non-adjacent faces (5) has an edge width on the upper nozzle side smaller than the edge width on the bottom nozzle side, the cell's centerline (9) intersecting these faces (5) forms an angle of 30 degrees with the above diagonal (8), the remaining non-adjacent faces (5) have an edge width on the upper nozzle side that is greater than the edge width on the bottom nozzle side, the cells (3) of each row (7) being oriented in the same way, and the cells' centerlines (9) in adjacent rows (7) form an angle of 60 degrees.

2. The fuel assembly according to claim 1, **characterized in that** the width of the inclined edges of the cells (3) changes along the cell's axis in such a way that the cross-sectional area of the cell (3) is constant along its axis.

## Patentansprüche

1. Ein Brennelement des Kernreaktors mit einem Querschnitt in Form eines regelmäßigen Sechsecks, enthaltend Ober- und Unterfüße, Führungskanäle, in den Knoten eines Dreiecksnetzes angeordnetes Brennstoffbündel (1) und mindestens ein Gitter (2), bestehend aus festzusammengebundenen Zellen (3) in Form eines Polygonal-Rohrs (4), dessen Längsachse mit der Längsachse des Brennstoffbündels zusammenfällt, jede Zelle (3) sechs nicht benachbarte Flächen umfasst (5), die durch Änderung ihrer Breite entlang der Zellenachse geneigt ausgeführt sind, und jede Zelle (3) schließt Flächen (6) ein, die zwischen den nicht benachbarten Flächen (5) liegen und parallel zur Achse des Brennelementes verlaufen, die Zellen (3) grenzen mit Flächen (6) aneinander und die Zellen (3) liegen in Reihen (7) im Gitter parallel zu einer der großen Diagonalen (8) des regelmäßigen Sechsecks, **dadurch gekennzeichnet, dass** ein Paar gegenüberliegender, nicht benachbarter Flächen (5) eine Kantenbreite seitlich des Oberfußes kleiner als die Kantenbreite seitlich des Unterfußes aufweist, wobei die Zellenmittelachse (9), die diese Flächen (5) schneidet, mit der obigen Diagonale (8) einen Winkel von 30 Grad bildet, die übrigen nicht benachbarten Flächen (5) seitens des Oberfußes eine größere Kantenbreite als die Kantenbreite seitens des Unterfußes haben, die Zellen (3) jeder Reihe (7) gleich ausgerichtet sind und die Zellenmittelachsen (9) in benachbarten Reihen (7) einen Winkel von 60 Grad bilden.

2. Das Brennelement nach Anspruch 1, **dadurch gekennzeichnet, dass** die Breite der geneigten Kanten der Zellen (3) entlang der Zellenachse derart variiert, dass die Querschnittfläche der Zelle (3) entlang ihrer Achse konstant ist.

## Revendications

1. Assemblage combustible du réacteur nucléaire dont la section transversale a la forme d'un hexagone régulier et qui contient une queue supérieure et une queue inférieure, les canaux guides, les unités de combustible (1) placées dans les noeuds du réseau triangulaire et, au moins, une grille (2) composée des mailles (3) réunies entre elles de façon inséparable et réalisées en forme d'un tube à plusieurs faces (4) et l'axe longitudinal de ce tube coïncide avec l'axe longitudinal de l'unité de combustible, chaque maille (3) inclut six faces (5) non adjacentes qui sont inclinées grâce au changement de leur largeur le long de l'axe de la maille, et chaque maille (3) inclut les faces (6) qui sont placées entre les faces (5) non adjacentes et passent parallèlement à l'axe de l'assemblage combustible, les mailles (3) aboutissent l'une à l'autre par leurs faces (6) et sont placées dans la grille en rangs (7) parallèles à l'une des grandes diagonales (8) de l'hexagone régulier, **qui se distingue par ce que** la largeur du bord d'une paire de faces (5) non adjacentes opposées du côté de la queue supérieure est moins grande que la largeur du bord du côté de la queue inférieure, l'axe de symétrie de la maille (9) qui traverse ces faces (5) forme un angle de 30 degrés avec la diagonale (8) susmentionnée, la largeur du bord des faces (5) non adjacentes restantes du côté de la queue supérieure est plus grande que la largeur du bord du côté de la queue inférieure, les mailles (3) de chaque rang (7) sont orientées également, et les axes de symétrie des mailles (9) dans les rangs (7) adjacents forment un angle de 60 degrés.

2. Assemblage combustible selon le point 1 qui se distingue par ce que la largeur des faces inclinées des mailles (3) change le long de l'axe de la maille de façon que la surface de la section transversale de la maille (3) reste constante le long de son axe.
